# EUROPÄISCHE PATENTSCHRIFT

(11) **EP 3 371 050 B1**
(45) Veröffentlichungstag und Bekanntmachung des Hinweises auf die Patenterteilung: **01.11.2023**
(21) Anmeldenummer: 16801390.2
(22) Anmeldetag: 01.11.2016
(51) Int. Cl.: B64C 39/02, B64D 47/08, B64U 10/13, B64U 30/20, B64U 50/19, B64U 101/30, H04N 23/90

(54) **FLÜGELLOSES FLUGGERÄT**
WINGLESS AIRCRAFT
AÉRONEF SANS AILES

(30) Priorität: 06.11.2015 DE 102015119065
(43) Veröffentlichungstag der Anmeldung: 12.09.2018
(60) Teilanmeldung: 23177056.1
(73) Patentinhaber: Spherie GmbH, 20457 Hamburg (DE)
(72) Erfinder: HESSELBARTH, Jonathan, 64283 Darmstadt (DE); CHIBAC, Nicolas, 20359 Hamburg (DE)
(74) Vertreter: Eisenführ Speiser
(86) Internationale Anmeldenummer: PCT/EP2016/076307
(87) Internationale Veröffentlichungsnummer: WO 2017/076837

(56) Entgegenhaltungen:
- EP-A2- 2 728 308
- EP-A2- 2 772 725
- WO-A2-2014/007873
- CN-A- 103 387 051
- CN-A- 104 890 875
- CN-U- 204 264 449
- DE-A1-102005 020 592
- DE-A1-102014 103 847
- GB-A- 2 385 840
- US-A1- 2012 303 179

## Beschreibung

Die Erfindung betrifft ein flügelloses Fluggerät mit mehreren elektromotorisch angetriebenen und um verschiedene Rotorachsen rotierenden Hubrotoren, wobei das Fluggerät mindestens einen Energiespeicher zur Bereitstellung der zum Betrieb der Hubrotoren erforderlichen elektrischen Energie, mindestens eine Steuerungseinrichtung zur Ansteuerung der Hubrotoren und zur Kommunikation mit einer Bodenstation und mindestens zwei Kameraeinrichtungen zur Erfassung eines Panoramabildes aufweist. Dabei weist eine kleinste, kugelförmige und sämtliche Hubrotoren umschließende Rotoreinhüllende ein größeres Volumen auf als eine kleinste kugelförmige Kameraeinhüllende. Die Kameraeinhüllende umschließt die Kameralinsen sämtlicher Kameraeinrichtungen, wobei die Kameraeinrichtungen einen Sichtraum aufspannen, der Sichtraum aus einem Schnitt von Sichtfeldern der Kameraeinrichtungen ergibt. Die Hubrotoren liegen außerhalb des Sichtraums, und wobei der Sichtraum das Fluggerät zumindest teilweise umgibt.

Solche unbemannten und von der Bodenstation aus ferngesteuerten Fluggeräte wie beispielsweise Quadrokopter werden zur Erstellung von Luftbildpanoramen verwendet. Zu diesem Zweck werden bei den bekannten Fluggeräten üblicherweise mehrere Kameraeinrichtungen an einem Rahmen des Fluggeräts angeordnet, wobei die Kameraeinrichtungen möglichst so angeordnet werden, dass Sichtfelder der Kameraeinrichtungen in einem Abstand zu dem Fluggerät einander überlappen, um die gesamte Umgebung des Fluggeräts abbilden zu können. Zusätzlich muss darauf geachtet werden, dass keine Komponenten des Fluggeräts innerhalb der Sichtfelder der Kameraeinrichtungen liegen, um die Panoramaaufnahme der Umgebung des Fluggeräts nicht zu beeinträchtigen. Um dies zu erreichen, werden die Kameraeinrichtungen üblicherweise möglichst weit außen an dem Fluggerät angeordnet, sodass die übrigen Komponenten des Fluggeräts jeweils möglichst hinter der jeweiligen Kameraeinrichtung angeordnet sind.

Ein solches flügelloses Fluggerät mit mehreren Kameraeinrichtungen zur Erzeugung eines 360°x360°-Panoramabildes ist in der Druckschrift GB 2 385 840 A beschrieben. Das beschriebene flügellose Fluggerät ist scheibenartig ausgestaltet und weist zwei Kameraeinrichtungen auf. Jeweils eine Kameraeinrichtung ist auf jeder Seite des scheibenartig ausgestalteten flügellosen Fluggeräts angeordnet. Mit jeder einzelnen Kameraeinrichtung kann ein 180°×360°-Sichtfeld aufgezeichnet werden. Durch die Überlagerung beider Sichtfelder kann ein 360°×360°-Sichtraum aufgespannt werden. Damit Komponenten und Teile des flügellosen Fluggeräts von den einzelnen Sichtfeldern der Kameraeinrichtungen nicht erfasst werden, sind die Kameraeinrichtungen in einem bestimmten Abstand zu dem Gehäuse des flügellosen Fluggeräts angeordnet. Durch diese Anordnung der Kameraeinrichtungen und durch die scheibenartige Ausgestaltung des flügellosen Fluggeräts entsteht außerhalb des Gehäuses des flügellosen Fluggeräts ein relativ großer von den Sichtfeldern der Kameraeinrichtungen nicht erfassbarer Blindraum, wobei in den Blindraum hineinreichende Gegenstände nicht erfassbar sind.

Die aus dem Stand der Technik bekannten Fluggeräte mit Kameraeinrichtungen zur Erfassung der vollständigen Umgebung des Fluggeräts sind bestens geeignet, um Panoramaaufnahmen der Umgebung aus größeren Abständen zu dem Fluggerät zu erzeugen. Umso näher die in der Umgebung abzubildenden Gegenstände an das Fluggerät heranrücken, umso schwieriger wird bei den aus dem Stand der Technik bekannten Fluggeräten die Abbildung, da sich die verschiedenen Sichtfelder der Kameraeinrichtungen auf Grund der beabstandeten Anordnung der Kameraeinrichtungen zueinander erst in einem erheblichen Abstand zu dem Fluggerät miteinander schneiden und einen das gesamte Fluggerät umgebenden Sichtraum bilden, in dem sämtliche Gegenstände vollständig abgebildet werden können. Die Aufnahme und Erstellung von Panoramen der Umgebung kann jedoch ausschließlich in dem Abstand zu dem Fluggerät erfolgen, in dem die Umgebung vollständig abgebildet wird und indem sich daher die Sichtfelder der verschiedenen Kameraeinrichtungen jeweils miteinander überschneiden.

Aus diesem Grund sind die aus dem Stand der Technik bekannten Fluggeräte nicht dazu geeignet, Panoramaaufnahmen beispielsweise bei nahen Vorbeiflügen an Gebäuden, bei Flügen durch Gebäude oder beispielsweise auch durch Wälder oder dergleichen aufzunehmen und zu erzeugen, da bei solchen Aufnahmen die aufzunehmenden Gegenstände regelmäßig außerhalb der Sichtfelder der Kameras liegen, sodass diese Gegenstände jeweils nur teilweise abgebildet werden können und die Erstellung eines vollständigen Panoramaabbilds der Umgebung des Fluggeräts zu jedem Zeitpunkt des Vorbeiflugs nicht bzw. nur eingeschränkt möglich ist.

Als Sichtfeld einer Kameraeinrichtung wird der Bereich bzw. das Volumen des Gegenstandsraums bzw. der Umgebung des Fluggeräts bezeichnet, der mit der Kameraeinrichtung erfasst werden kann. Bei Verwendung einer Kameraeinrichtung mit einem rechteckigen Fotosensor ist das Sichtfeld der Kameraeinrichtung pyramidenstumpfförmig, wobei eine Pyramidenspitze im objektivseitigen Brennpunkt der Kameraeinrichtung liegt.

Als Aufgabe der Erfindung wird es angesehen, die aus dem Stand der Technik bekannten Fluggeräte so weiter zu entwickeln, dass möglichst vollständige Umgebungsaufnahmen bzw. Panoramaabbildungen auch bei möglichst nahen Vorbeiflügen an Gegenständen möglich sind.

Diese Aufgabe wird erfindungsgemäß dadurch gelöst, dass eine kleinste, kugelförmige und sämtliche Hubrotormittelpunkte umschließende Mittelpunkteinhüllende ein größeres Volumen aufweist als die kleinste kugelförmige Kameraeinhüllende. Durch die Verwendung eines solchen speziell ausgestalteten Fluggeräts, bei dem die Hubrotoren weiter außen liegend an beispielsweise einem Rahmen des Fluggeräts angeordnet werden, können die Kameraeinrichtungen näher zueinander angeordnet werden, wodurch sich die Sichtfelder der verschiedenen Kameraeinrichtungen des Fluggeräts in einem geringeren Abstand zu dem Fluggerät miteinander schneiden. Bei dieser speziellen Konstruktion ist es erforderlich, die Anordnung der Hubrotoren an die erforderliche Anordnung der Kameraeinrichtungen anzupassen. Daher ist jeweils eine an die verwendeten Kameraeinrichtungen angepasste Konstruktion des Fluggeräts erforderlich.

Bei dem erfindungsgemäßen Fluggerät umgibt der Sichtraum das Fluggerät mindestens teilweise. Um auch Panoramaabbildungen der vollständigen Umgebung des Fluggeräts erzeugen zu können, ist in besonders bevorzugten Ausführungsformen des erfindungsgemäßen Fluggeräts vorgesehen, dass der Sichtraum das gesamte Fluggerät umgibt.

Dadurch, dass erfindungsgemäß eine kleinste, kugelförmige und sämtliche Hubrotormittelpunkt umschließende Mittelpunkteinhüllende ein größeres Volumen aufweist als die kleinste kugelförmige Kameraeinhüllende, kann der noch vollständig erfassbare Bereich vergrößert werden, sodass nah an das Fluggerät heranreichende Gegenstände vollständig erfassbar sind. Als Hubrotormittelpunkte werden die jeweiligen Mittelpunkte bzw. Schwerpunkte der Hubrotoren bezeichnet.

Die Effizienz der Hubrotoren steigt mit zunehmender Rotorfläche. Um die Rotorfläche der Hubrotoren möglichst groß gestalten zu können und gleichzeitig außerhalb der Sichtfelder der Kameraeinrichtungen anordnen zu können, ist es erfindungsgemäß vorgesehen, den von den Kameraeinrichtungen bzw. den Sichtfeldern der Kameraeinrichtungen erfassbaren Sichtraum zu bestimmen. Der Sichtraum ergibt sich aus dem Schnitt der Sichtfelder miteinander. Mit Hilfe oder anstelle des Sichtraums kann auch einfach der Blindraum bestimmt werden, der von keiner der Kameraeinrichtungen erfasst werden kann. Bei pyramidenstumpfförmigen Sichtfeldern bildet der Blindraum einen nicht konvexen Körper mit mehreren gekrümmten Seitenflächen, die in Eckbereichen des Körpers spitz aufeinander zulaufen. Die Hubrotoren werden hierbei vorteilhafterweise in den möglichst weit außen liegenden Bereichen angeordnet, bei denen es sich üblicherweise um die spitz zulaufenden Eckbereiche des von den Kameraeinrichtungen nicht erfassbaren Blindraums handelt.

Vorteilhafterweise ist erfindungsgemäß vorgesehen, dass die Kameraeinrichtungen Kameras zur Aufnahme monoskopischer Abbildungen und/oder Kameras zur Aufnahme stereoskopischer Abbildungen aufweisen. Beispielsweise können die Kameraeinrichtungen Kameraarrays bestehend aus jeweils mindestens zwei beabstandet zueinander angeordneten Kameras aufweisen, mit denen stereoskopische Abbildungen der Umgebung des Fluggeräts erzeugt werden können. Die Verwendung solcher Kameraeinrichtungen zur Aufnahme stereoskopischer Abbildungen erlaubt die Ermittlung von Tiefenrauminformationen. Die stereoskopen Aufnahmen können zur Erzeugung von Virtual-Reality-Darstellungen der Umgebung verwendet werden. Zudem ist es mit dem erfindungsgemäßen Fluggerät bei Verwendung von Kameraeinrichtungen die stereoskope Aufnahmen erlauben möglich, das Fluggerät zur 3-D-Vermessung der Umgebung mit Hilfe photogrammetrischer Verfahren zu verwenden.

Bei einer besonders vorteilhaften Ausgestaltung des erfindungsgemäßen Fluggeräts ist vorgesehen, dass mindestens ein Linsenabstand zweier Kameraeinrichtungen voneinander geringer ist als mindestens ein Rotorabstand zweier Rotoren voneinander. Durch die möglichst nahe Anordnung der Kameraeinrichtungen zueinander können vollständige Panoramen auch bei näheren Vorbeiflügen an Gegenständen erzeugt werden.

Um die Panoramaaufnahme der Umgebung nicht zu beeinträchtigen, ist erfindungsgemäß vorgesehen, dass sämtliche Komponenten des Fluggeräts außerhalb des Sichtraums liegen. Durch die Anordnung der Komponenten wie beispielsweise des erforderlichen Energiespeichers und der Steuerungseinrichtung innerhalb des Blindraums, werden diese Komponenten von den Kameraeinrichtungen nicht erfasst.

Bei einer besonders vorteilhaften Konstruktion des flügellosen Fluggeräts ist vorgesehen, dass das Fluggerät mindestens vier Kameraeinrichtungen aufweist, wobei die Kameraeinrichtungen so angeordnet und zueinander ausgerichtet sind, dass zu Bildebenen der Kameraeinrichtungen parallele Objektivebenen ein konvexes Objektivpolyeder umschließen, sodass jede Grenzfläche des Objektivpolyeders in einer Objektivebene liegt und Objektive der Kameraeinrichtungen vollständig innerhalb des Objektivpolyeders angeordnet sind. Als Bildebene wird eine Ebene durch die Kameraeinrichtung bezeichnet, in der der Bildsensor der Kameraeinrichtung angeordnet ist.

Vorteilhafterweise ist erfindungsgemäß vorgesehen, dass die Hubrotoren in einem Bereich zwischen dem Sichtraum und dem konvexen Objektivpolyeder angeordnet sind. Um einen ausreichenden Auftrieb durch die Hubrotoren zu ermöglichen, ist es erfindungsgemäß vorgesehen, die Hubrotoren unter einem möglichst großen Abstand zueinander anzuordnen, sodass möglichst großflächige oder möglichst viele Hubrotoren an dem flügellosen Fluggerät angeordnet werden können.

Um den Blindraum möglichst gut auch zur Anordnung von Hubrotoren ausnutzen zu können, ist erfindungsgemäß vorgesehen, dass die Hubrotoren teilweise in den Bereich des konvexen Objektivpolyeders hineinragend angeordnet sind. Es ist aber auch möglich und erfindungsgemäß vorgesehen, dass die Hubrotoren vollständig außerhalb des konvexen Objektivpolyeders angeordnet sind. Auf diese Weise kann der von dem konvexen Polyeder umschlossene Teil des Blindraums besonders einfach zur Anordnung der weiteren Komponenten wir beispielsweise des Energiespeichers verwendet werden.

Bei einer besonders vorteilhaften Ausgestaltung des erfindungsgemäß flügellosen Fluggeräts ist vorgesehen, dass der Energiespeicher, die Steuerungseinrichtung und die Kameraeinrichtungen vollständig innerhalb des konvexen Objektivpolyeders angeordnet sind. Dadurch, dass möglichst viele Komponenten eng beieinander und insbesondere nah zu den Kameraeinrichtungen in einem Zentrum des flügellosen Fluggeräts angeordnet werden, kann das Gewicht der Komponenten vorteilhafterweise zur Schwingungsdämpfung verwendet werden, um eine Bildaufnahme durch die Kameraeinrichtungen zu stabilisieren und eine Aufzeichnung möglichst ohne störende und durch die Hubrotoren erzeugte Schwingungseinflüsse zu ermöglichen.

Für eine weiter optimierte Anordnung der Hubrotoren in dem Blindraum und insbesondere in den spitz zulaufenden Bereichen des Blindraums ist erfindungsgemäß vorgesehen, dass mindestens zwei Hubrotoren so angeordnet sind, dass Rotorachsen der Hubrotoren nicht parallel zueinander ausgerichtet sind. Durch eine solche zu einer Hochachse des flügellosen Fluggeräts nicht parallele Ausrichtung der Hubrotoren, können die Hubrotoren besonders gut in die spitz zulaufenden Bereiche des Blindraums eingepasst werden. Zudem erlaubt eine solche schräge Anordnung der Hubrotoren bei Verwendung von mindestens sechs Hubrotoren ein seitliches Beschleunigen sowie Abbremsen des Fluggeräts. Dadurch kann das Fluggerät in beliebige Richtungen ohne Kippen um eine Gierachse des Fluggeräts gesteuert werden. Auf diese Weise kann jeweils ein Anstellwinkel der Kameraeinrichtungen in Bezug auf die Gierachse des Fluggeräts konstant gehalten werden. Bei aus dem Stand der Technik bekannten Fluggeräten werden zu diesem Zweck üblicherweise aufwendige kardanische Aufhängungen mit Elektroservomotoren verwendet, an denen die Kameraeinrichtungen gelagert werden.

Zur Anordnung der verschiedenen Komponenten des flügellosen Fluggeräts relativ zueinander ist vorgesehen, dass die Hubrotoren an einem Fluggerätrahmen des Fluggeräts angeordnet sind. Der Fluggerätrahmen besteht vorteilhafterweise aus Profilen und kann je nach Konstruktionsweise im Wesentlichen eben ausgestaltet werden oder auch verschiedene komplexe Körper bilden.

Bei einer besonders vorteilhaften Ausgestaltung des flügellosen Fluggeräts ist vorgesehen, dass der Fluggerätrahmen einen Aufnahmeraum umschließt, innerhalb dessen der Energiespeicher, die Steuerungseinrichtung und die Kameraeinrichtungen vollständig angeordnet sind. Bei dieser Konstruktion ist der Fluggerätrahmen vorteilhafterweise so ausgestaltet und angeordnet, dass der Fluggerätrahmen innerhalb des Blindraums angeordnet ist. Bei dem Aufnahmeraum kann es sich beispielsweise um einen im Wesentlichen quaderförmigen oder beliebig polyederförmigen Raum Handeln. Erfindungsgemäß ist vorgesehen, dass die Hubrotoren des flügellosen Fluggeräts zwei spiegelbildlich angeordnete Hubrotorgruppen bilden, wobei Hubrotormittelunkte der Hubrotoren einer Hubrotorgruppe jeweils im Wesentlichen in einer Hubrotorebene liegen, und wobei die Hubrotorebenen der beiden Hubrotorgruppen im Wesentlichen parallel zueinander und orthogonal zu der Hochachse des flügellosen Fluggeräts ausgerichtet sind. Die Hubrotoren der beiden Hubrotorgruppen sind vorteilhafterweise beabstandet zueinander an einander gegenüberliegenden Seiten des Fluggerätrahmens an dem Fluggerätrahmen angeordnet.

Erfindungsgemäß ist vorteilhafterweise vorgesehen, dass die Antriebseinrichtungen der Hubrotoren und die Hubrotoren starr mit dem Fluggerätrahmen verbunden sind. Auf diese Weise kann die von den Hubrotoren erzeugte Schubkraft wirkungsvoll auf den Fluggeräterahmen übertragen werden.

Um eine möglichst gute Dämpfung der von den Hubrotoren erzeugten und auf den Fluggerätrahmen übertragenen Schwingungen im Bereich der Kameraeinrichtungen zu erreichen, ist erfindungsgemäß vorgesehen, dass der Energiespeicher, die Steuerungseinrichtung und die Kameraeinrichtungen über Dämpfungseinrichtungen an dem Fluggerätrahmen festgelegt sind. Bei den Dämpfungseinrichtungen kann es sich beispielsweise um geeignete gummielastische Elemente handeln.

Vorteilhafterweise ist erfindungsgemäß vorgesehen, dass der Energiespeicher, die Steuerungseinrichtung und die Kameraeinrichtungen starr miteinander verbunden sind. Auf diese Weise bilden diese Komponenten des flügellosen Fluggeräts eine vergleichsweise große, zusammenhängende Masse, durch die eine besonders gute Schwingungsdämpfung erreicht werden kann.

Weitere vorteilhafte Ausgestaltungen des erfindungsgemäß flügellosen Fluggeräts werden anhand von in der Zeichnung dargestellten Ausführungsbeispielen näher erläutert.

Es zeigt:
Figur 1a eine schematisch dargestellte Seitenansicht eines Quadrokopters mit zwei Kameraeinrichtungen,
Figur 1b eine schematisch dargestellte perspektivische Ansicht des in Figur 1a dargestellten Quadrokopters,
Figur 2a eine schematisch dargestellte Seitenansicht eines Trikopters, wobei vier Kameraeinrichtungen so angeordnet sind, dass ein Objektivpolyeder pyramidenförmig ausgestaltet ist,
Figur 2b eine schematisch dargestellte perspektivische Ansicht des in Figur 2a dargestellten Trikopters,
Figur 3a eine schematisch dargestellte Seitenansicht eines Oktokopters, wobei sechs Kameraeinrichtungen so angeordnet sind, dass ein Objektivpolyeder quaderförmig ausgestaltet ist,
Figur 3b eine schematisch dargestellte perspektivische Ansicht des in Figur 3a dargestellten Oktokopters,
Figur 4a eine schematisch dargestellte Seitenansicht eines flügellosen Fluggeräts mit zwölf Hubrotoren, wobei acht Kameraeinrichtungen so angeordnet sind, dass ein Objektivpolyeder ein Prisma mit einer sechseckigen Grundfläche bildet,
Figur 4b eine schematisch dargestellte perspektivische Ansicht des in Figur 4a dargestellten Fluggeräts,
Figur 5 eine schematisch dargestellte Seitenansicht eines flügellosen Fluggeräts mit zwölf Hubrotoren, wobei zwölf Kameraeinrichtungen so angeordnet sind, dass ein Objektivpolyeder einen prismatischen Körper mit einer sechseckigen Grundfläche aufweist, wobei an einander gegenüberliegenden Grundseitenflächen spiegelbildlich ausgestaltete Pyramiden angeordnet sind,
Figur 6 eine schematisch dargestellte Seitenansicht eines flügellosen Fluggeräts mit sechs Hubrotoren, wobei fünf Kameraeinrichtungen so angeordnet sind, dass ein Objektivpolyeder ein Prisma mit einer dreieckigen Grundfläche bildet,
Figur 7 eine schematisch dargestellte Ansicht eines Oktokopters, wobei sechs Kameraeinrichtungen so angeordnet sind, dass ein Objektivpolyeder quaderförmig ausgestaltet ist,
Figur 8 eine schematisch dargestellte Seitenansicht eines flügellosen Fluggeräts mit einem Fluggerätrahmen,
Figuren 9a bis 9d unterschiedliche und schematisch dargestellte Ansichten eines flügellosen Fluggeräts mit acht an einem einen quaderförmigen Aufnahmeraum umschließenden Fluggerätrahmen angeordneten Hubrotoren, die zwei Hubrotorgruppen bilden und
Figuren 10a bis 10e unterschiedliche Ansichten des durch die in den Figuren 9a bis 9d dargestellte Anordnung der Kameraeinrichtungen gebildeten Blindraum.

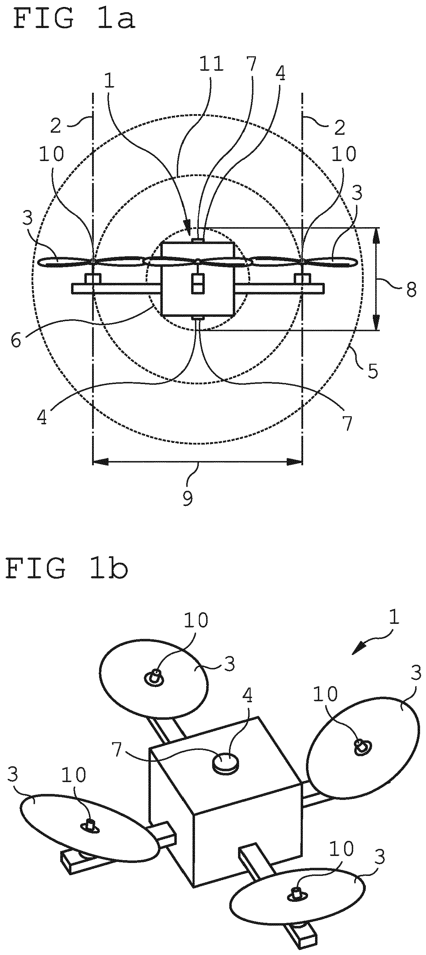

In den Figuren 1a und 1b ist schematisch ein flügelloses Fluggerät 1 mit vier elektromotorisch angetriebenen und um verschiedene Rotorachsen 2 rotierenden Hubrotoren 3 dargestellt. Das Fluggerät 1 weist zwei Kameraeinrichtungen 4 zur Erfassung eines Panoramabildes auf.

Die Kameraeinrichtungen 4 und die Hubrotoren 3 sind so angeordnet und zueinander ausgerichtet, dass eine kleinste, kugelförmige und sämtliche Hubrotoren 3 umschließende Rotoreinhüllende 5 ein größeres Volumen aufweist als eine kleinste kugelförmige Kameraeinhüllende 6, die Kameralinsen 7 sämtlicher Kameraeinrichtungen 4 umschließt. Die Kameraeinrichtungen 4 spannen einen Sichtraum auf, wobei der Sichtraum das gesamte Fluggerät 1 umgibt, um die gesamte Umgebung des Fluggeräts 1 erfassen zu können. Die Hubrotoren 3 liegen außerhalb des Sichtraums. Zudem ist ein Linsenabstand 8 der beiden Kameraeinrichtungen 4 voneinander geringer als ein Rotorabstand 9 zweier einander gegenüberliegend angeordneter Hubrotoren 3 voneinander. Bei dem Fluggerät weist auch eine kleinste, kugelförmige und sämtliche Hubrotormittelpunkte 10 umschließende Mittelpunkteinhüllende 11 ein größeres Volumen auf als die kleinste kugelförmige Kameraeinhüllende 6.

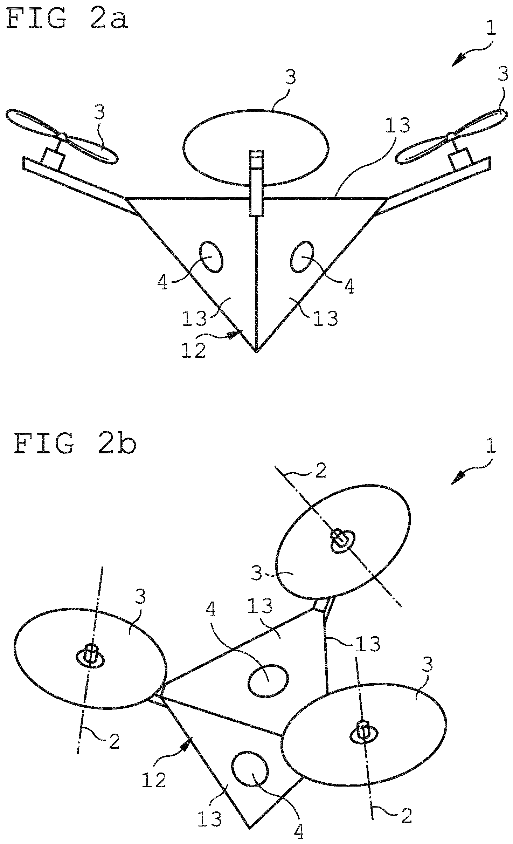

Die Figuren 2a und 2b zeigen schematisch dargestellte Ansichten eines flügellosen Fluggeräts 1, wobei vier Kameraeinrichtungen 4 so angeordnet sind, dass ein Objektivpolyeder 12 vier Grenzflächen 13 aufweist und pyramidenförmig ausgestaltet ist. Die Hubrotoren 3 des flügellosen Fluggeräts 1 sind vollständig außerhalb des konvexen Objektivpolyeders 12 angeordnet. Zudem sind die Hubrotoren 4 so angeordnet, dass Rotorachsen 2 der Hubrotoren 4 nicht parallel zueinander ausgerichtet sind.

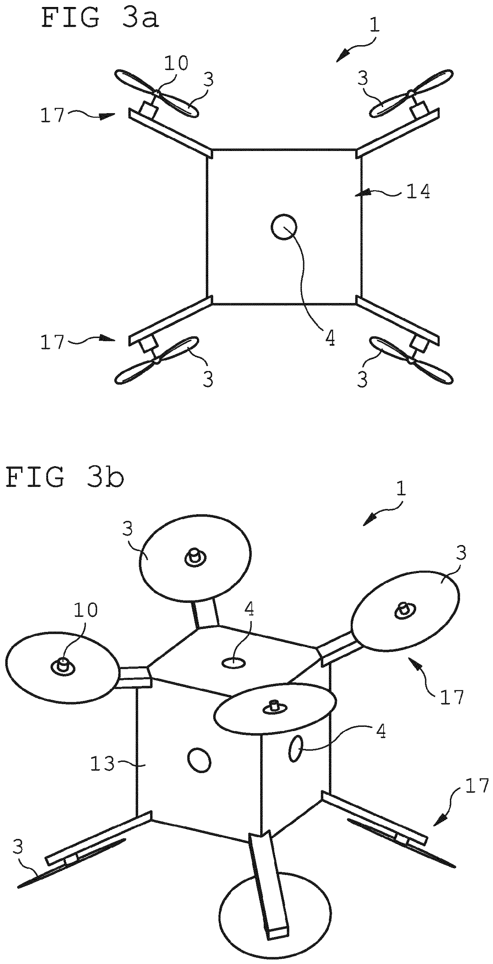

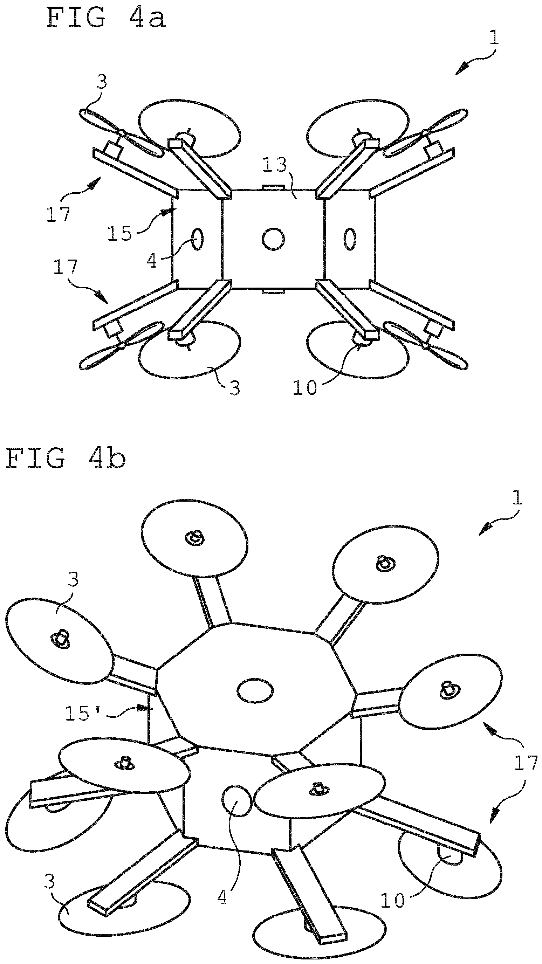

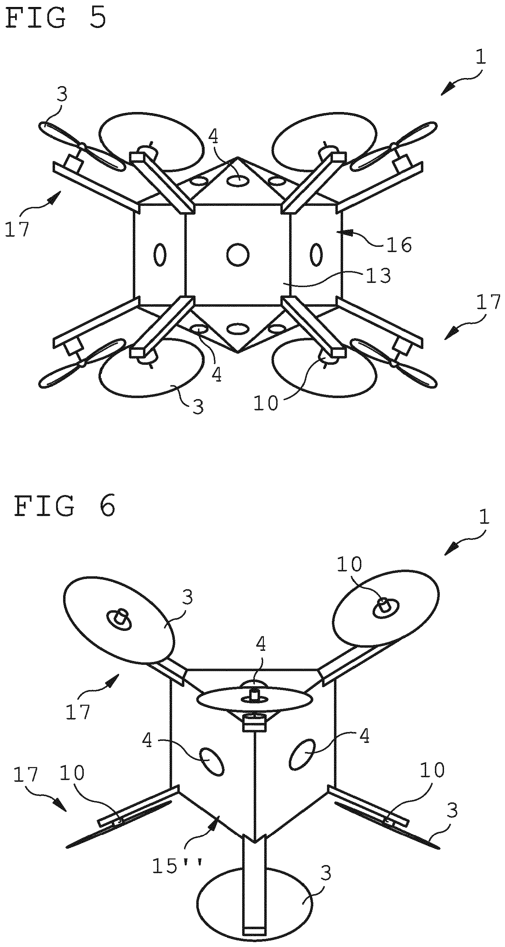

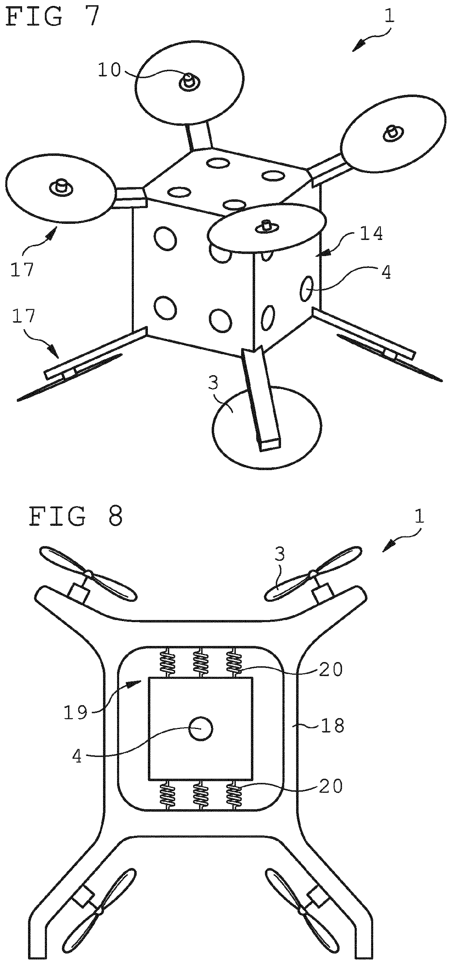

Die Figuren 3a, 3b, 4a, 4b, 5 und 6 zeigen jeweils alternativ ausgestaltete flügellose Fluggeräte 1, wobei das in den Figuren 3a und 3b dargestellte Fluggerät 1 einen quaderförmiges Objektivpolyeders 14, das in den Figuren 4a und 4b dargestellte Fluggerät 1 ein prismatisches Objektivpolyeder 15' mit sechseckiger Grundfläche, das in Figur 5 dargestellte Fluggerät 1 ein prismatisches Objektivpolyeder 16 mit einer sechseckigen Grundfläche und mit an einander gegenüberliegenden Grundseitenflächen spiegelbildlich ausgestalteten Pyramiden und das in Figur 6 dargestellte Fluggerät 1 ein prismatisches Objektivpolyeder 15" mit dreieckiger Grundfläche aufweist. Das in den Figuren 3a und 3b dargestellte Fluggerät 1 weist sechs Kameraeinrichtungen 4, das in den Figuren 4a und 4b dargestellte Fluggerät 1 acht Kameraeinrichtungen 4, das in Figur 5 dargestellte Fluggerät 1 zwölf Kameraeinrichtungen 4 und das in Figur 6 dargestellte Fluggerät 1 fünf Kameraeinrichtungen 4 auf. In Figur 7 ist ein Fluggerät 1 mit einem quaderförmigen Objektivpolyeder 14 und vierundzwanzig Kameraeinrichtungen 4 dargestellt.

Die in den Figuren 3a bis 7 dargestellten Fluggeräte 1 weisen jeweils mehrere Hubrotoren 3 auf, wobei die Hubrotoren 3 jeweils zwei Hubrotorgruppen 17 zugeordnet werden können. Die Hubrotoren 3 der einzelnen Hubrotorgruppen 17 sind jeweils so angeordnet, dass durch die Hubrotormittelpunkte 10 verlaufende Ebenen je Fluggerät 1 parallel zueinander ausgerichtet sind.

Figur 8 zeigt eine schematisch dargestellte Ansicht eine flügellosen Flugobjekts 1, wobei Hubrotoren 3 an einem Fluggerätrahmen 18 des Fluggeräts 1 angeordnet sind. Der Fluggerätrahmen 18 umschließt einen Aufnahmeraum 19, innerhalb dessen ein nicht dargestellter Energiespeicher, eine ebenfalls nicht dargestellte Steuereinrichtung und die Kameraeinrichtungen 4 vollständig angeordnet sind. Die Hubrotoren 3 sind starr mit dem Fluggerätrahmen 18 verbunden. Der Energiespeicher, die Steuerungseinrichtung und die Kameraeinrichtungen 4 sind über Dämpfungseinrichtungen 20 an dem Fluggerätrahmen 18 angeordnet.

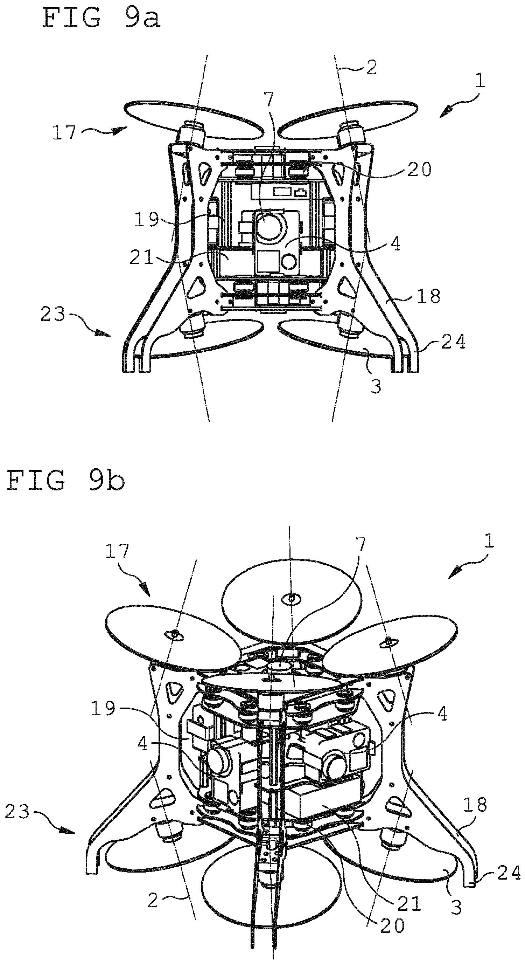

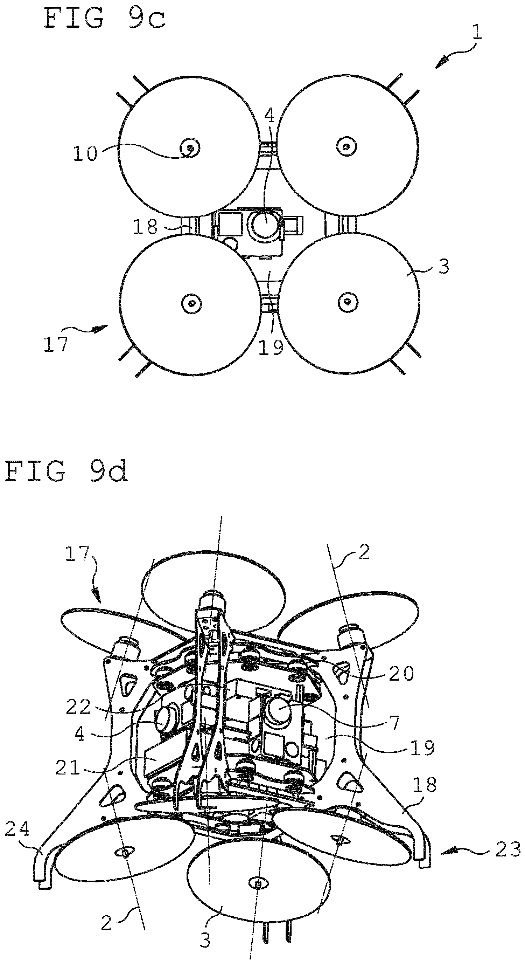

In den Figuren 9a bis 9d sind verschiedene Ansichten eine flügellosen Fluggeräts 1 mit einem Fluggerätrahmen 18 dargestellt, der einen näherungsweise quaderförmigen Aufnahmeraum 19 umschließt. Innerhalb des Aufnahmeraums 19 sind sechs Kameraeinrichtungen 4, ein Energiespeicher 21 und eine Steuerungseinrichtung 22 angeordnet. Der Energiespeicher 21, die Steuerungseinrichtung 22 und die Kameraeinrichtungen 4 sind starr miteinander verbunden. Der Fluggeräterahmen 18 weist in Richtung des Erdbodens ausgerichtete und die Hubrotoren 3 der dem Erdboden zugewandten Hubrotorgruppe 23 überragende Tragelemente 24 auf, mit denen das Fluggerät 1 auf dem Erdboden aufgesetzt werden kann.

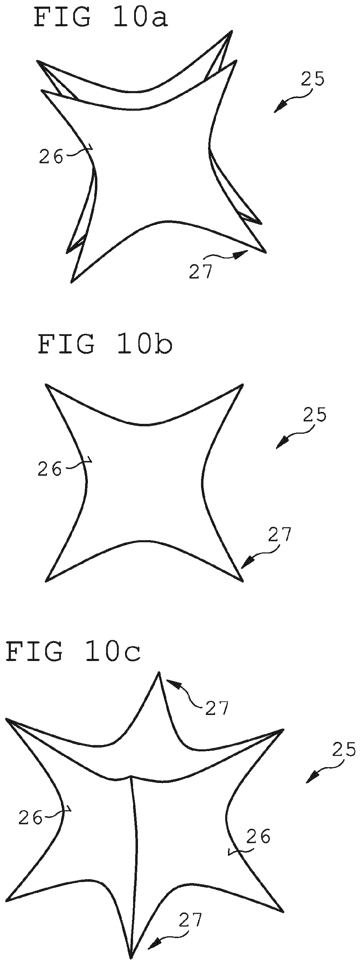

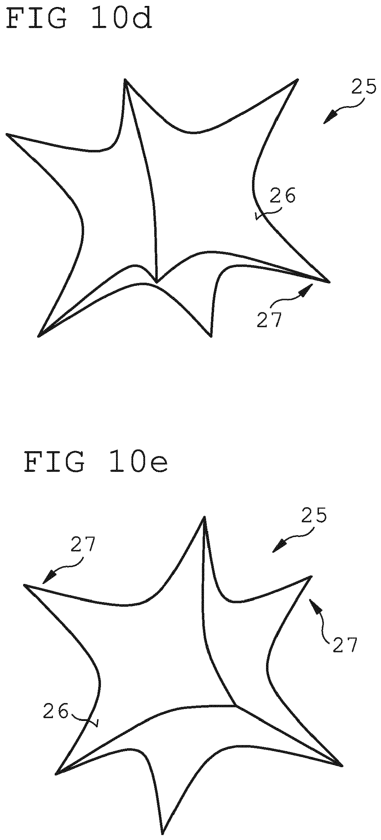

In den Figuren 10a bis 10e sind unterschiedliche Ansichten des durch die in den Figuren 9a bis 9d dargestellte Anordnung der Kameraeinrichtungen 4 gebildeten Blindraums 25 schematisch dargestellt. Der Blindraum 25 ergibt sich auf Grundlage pyramidenstumpfförmiger Sichtfelder der in den Figuren 9a bis 9d dargestellten Kameraeinrichtungen 4 und weist mehrere gekrümmte Seitenflächen 26 auf, die in Eckbereichen 27 des Blindraums 25 spitz aufeinander zulaufen.

In den Abbildungen sind exemplarisch teilweise einzelne Komponenten mehrerer gleichartiger Komponenten mit einem Bezugszeichen gekennzeichnet.

## Patentansprüche

1. Flügelloses Fluggerät (1) mit mehreren elektromotorisch angetriebenen und um verschiedene Rotorachsen (2) rotierenden Hubrotoren (3),
wobei das Fluggerät (1):
mindestens einen Energiespeicher (21) zur Bereitstellung der zum Betrieb der Hubrotoren (3) erforderlichen elektrischen Energie,
mindestens eine Steuerungseinrichtung (22) zur Ansteuerung der Hubrotoren (3) und zur Kommunikation mit einer Bodenstation und
mindestens zwei Kameraeinrichtungen (4) zur Erfassung eines Panoramabildes aufweist,
wobei eine kleinste, kugelförmige und sämtliche Hubrotoren (3) umschließende Rotoreinhüllende (5) ein größeres Volumen aufweist als eine kleinste kugelförmige Kameraeinhüllende (6), die Kameralinsen (7) sämtlicher Kameraeinrichtungen (4) umschließt,
wobei die Kameraeinrichtungen (4) einen Sichtraum aufspannen, wobei sich der Sichtraum aus einem Schnitt von Sichtfeldern der Kameraeinrichtungen (4) ergibt,
wobei die Hubrotoren (3) außerhalb des Sichtraums liegen, wobei der Sichtraum das Fluggerät (1) mindestens teilweise umgibt,
**dadurch gekennzeichnet, dass** eine kleinste, kugelförmige und sämtliche Hubrotormittelpunkte (10) umschließende Mittelpunkteinhüllende (11) ein größeres Volumen aufweist als die kleinste kugelförmige Kameraeinhüllende (6).

2. Flügelloses Fluggerät (1) gemäß Anspruch 1, **dadurch gekennzeichnet, dass** der Sichtraum das gesamte Fluggerät umgibt.

3. Flügelloses Fluggerät (1) gemäß Anspruch 1 oder 2, **dadurch gekennzeichnet, dass** die Kameraeinrichtungen (4) Kameras zur Aufnahme monoskopischer Abbildungen und/oder Kameras zur Aufnahme stereoskopischer Abbildungen aufweisen.

4. Flügelloses Fluggerät (1) gemäß einem der voranstehenden Ansprüche, **dadurch gekennzeichnet, dass** mindestens ein Linsenabstand (8) zweier Kameraeinrichtungen (4) voneinander geringer ist als mindestens ein Rotorabstand (9) zweier Rotoren (3) voneinander.

5. Flügelloses Fluggerät (1) gemäß einem der voranstehenden Ansprüche, **dadurch gekennzeichnet, dass** sämtliche Komponenten des Fluggeräts (1) außerhalb des Sichtraums liegen.

6. Flügelloses Fluggerät (1) gemäß einem der voranstehenden Ansprüche, **dadurch gekennzeichnet, dass** das Fluggerät (1) mindestens vier Kameraeinrichtungen (4) aufweist, wobei die Kameraeinrichtungen (4) so angeordnet und zueinander ausgerichtet sind, dass zu Bildebenen der Kameraeinrichtungen (4) parallele Objektivebenen ein konvexes Objektivpolyeder (12, 14, 15', 15", 16) umschlie-ßen, sodass jede Grenzfläche (13) des Objektivpolyeders (12, 14, 15', 15", 16) in einer Objektivebene liegt und Objektive der Kameraeinrichtungen (4) vollständig innerhalb des Objektivpolyeders (12, 14, 15', 15", 16) angeordnet sind.

7. Flügelloses Fluggerät gemäß Anspruch 6, **dadurch gekennzeichnet, dass** die Hubrotoren (3) in einem Bereich zwischen dem Sichtraum und dem konvexen Objektivpolyeder (12, 14, 15', 15", 16) angeordnet sind.

8. Flügelloses Fluggerät (1) gemäß Anspruch 7, **dadurch gekennzeichnet, dass** die Hubrotoren (3) teilweise in den Bereich des konvexen Objektivpolyeders (12, 14, 15', 15", 16) hineinragend angeordnet sind.

9. Flügelloses Fluggerät (1) gemäß Anspruch 7, **dadurch gekennzeichnet, dass** die Hubrotoren (3) vollständig außerhalb des konvexen Objektivpolyeders (12, 14, 15', 15", 16) angeordnet sind.

10. Flügelloses Fluggerät (1) gemäß einem der Ansprüche 6 bis 9, **dadurch gekennzeichnet, dass** der Energiespeicher (21), die Steuerungseinrichtung (22) und die Kameraeinrichtungen (4) vollständig innerhalb des konvexen Objektivpolyeders (12, 14, 15', 15", 16) angeordnet sind.

11. Flügelloses Fluggerät (1) gemäß einem der voranstehenden Ansprüche, **dadurch gekennzeichnet, dass** mindestens zwei Hubrotoren (3) so angeordnet sind, dass Rotorachsen (2) der Hubrotoren (3) nicht parallel zueinander ausgerichtet sind.

12. Flügelloses Fluggerät (1) gemäß einem der voranstehenden Ansprüche, **dadurch gekennzeichnet, dass** die Hubrotoren (3) an einem Fluggerätrahmen (18) des Fluggeräts (1) angeordnet sind.

13. Flügelloses Fluggerät (1) gemäß Anspruch 12, **dadurch gekennzeichnet, dass** der Fluggerätrahmen (18) einen Aufnahmeraum (19) umschließt, innerhalb dessen der Energiespeicher (21), die Steuerungseinrichtung (22) und die Kameraeinrichtungen (4) vollständig angeordnet sind.

14. Flügelloses Fluggerät (1) gemäß Anspruch 12 oder Anspruch 13, **dadurch gekennzeichnet, dass** Antriebseinrichtungen der Hubrotoren (3) und die Hubrotoren (3) starr mit dem Fluggerätrahmen (18) verbunden sind.

15. Flügelloses Fluggerät (1) gemäß einem der Ansprüche 12 bis 14, **dadurch gekennzeichnet, dass** der Energiespeicher (21), die Steuerungseinrichtung (22) und die Kameraeinrichtungen (4) über Dämpfungseinrichtungen (20) an dem Fluggerätrahmen (18) festgelegt sind.

## Claims

1. Wingless aircraft (1) with multiple lift rotors (3), which are driven by electric motors and rotate about different rotor axes (2),
wherein the aircraft (1) comprises:
at least one energy store (21) for providing the electrical energy necessary to operate the lift rotors (3),
at least one control device (22) for actuating the lift rotors (3) and for communicating with a ground station, and
at least two camera devices (4) for capturing a panoramic image,
wherein a smallest spherical rotor envelope (5) enclosing all the lift rotors (3) has a greater volume than a smallest spherical camera envelope (6) enclosing the camera lenses (7) of all the camera devices (4),
wherein the camera devices (4) span a visual area, the visual area resulting from an intersection of fields of view of the camera devices (4),
wherein the lift rotors (3) are located outside the visual area, the visual area at least partially surrounding the aircraft (1),
**characterized in that** a smallest spherical center point envelope (11) enclosing all the lift rotor center points (10) has a greater volume than the smallest spherical camera envelope (6).

2. Wingless aircraft (1) according to claim 1, **characterized in that** the visual area surrounds the entire aircraft.

3. Wingless aircraft (1) according to claim 1 or 2, **characterized in that** the camera devices (4) comprise cameras for capturing monoscopic images and/or cameras for capturing stereoscopic images.

4. Wingless aircraft (1) according to any one of the preceding claims, **characterized in that** at least one lens-to-lens distance (8) between two camera devices (4) is smaller than at least one rotor-to-rotor distance (9) between two rotors (3).

5. Wingless aircraft (1) according to any one of the preceding claims, **characterized in that** all the components of the aircraft (1) are located outside the visual area.

6. Wingless aircraft (1) according to any one of the preceding claims, **characterized in that** the aircraft (1) comprises at least four camera devices (4), wherein the camera devices (4) are arranged and oriented relative to one another in such a way that lens planes parallel to image planes of the camera devices (4) enclose a convex lens polyhedron (12, 14, 15', 15", 16), so that each boundary face (13) of the lens polyhedron (12, 14, 15', 15", 16) is located in a lens plane, and lenses of the camera devices (4) are arranged entirely inside the lens polyhedron (12, 14, 15', 15", 16).

7. Wingless aircraft according to claim 6, **characterized in that** the lift rotors (3) are arranged in a region between the visual area and the convex lens polyhedron (12, 14, 15', 15", 16).

8. Wingless aircraft (1) according to claim 7, **characterized in that** the lift rotors (3) are arranged in a manner partially protruding into the region of the convex lens polyhedron (12, 14, 15', 15", 16).

9. Wingless aircraft (1) according to claim 7, **characterized in that** the lift rotors (3) are arranged entirely outside the convex lens polyhedron (12, 14, 15', 15", 16).

10. Wingless aircraft (1) according to any one of claims 6 to 9, **characterized in that** the energy store (21), the control device (22) and the camera devices (4) are arranged entirely inside the convex lens polyhedron (12, 14, 15', 15", 16).

11. Wingless aircraft (1) according to any one of the preceding claims, **characterized in that** at least two lift rotors (3) are arranged in such a way that rotor axes (2) of the lift rotors (3) are not oriented parallel to one another.

12. Wingless aircraft (1) according to any one of the preceding claims, **characterized in that** the lift rotors (3) are arranged on an aircraft frame (18) of the aircraft (1).

13. Wingless aircraft (1) according to claim 12, **characterized in that** the aircraft frame (18) encloses a receiving space (19), inside which the energy store (21), the control device (22) and the camera devices (4) are entirely arranged.

14. Wingless aircraft (1) according to claim 12 or claim 13, **characterized in that** drive devices of the lift rotors (3) and the lift rotors (3) are connected to the aircraft frame (18) in a rigid manner.

15. Wingless aircraft (1) according to any one of claims 12 to 14, **characterized in that** the energy store (21), the control device (22) and the camera devices (4) are secured to the aircraft frame (18) via damping elements (20).

## Revendications

1. Aéronef dépourvu d'ailes (1) pourvu de plusieurs rotors sustentateurs (3) entraînés par un moteur électrique et rotatifs autour de différents axes de rotor (2),
l'aéronef (1) présentant :
au moins un accumulateur d'énergie (21) destiné à mettre à disposition l'énergie électrique nécessaire au fonctionnement des rotors sustentateurs (3),
au moins un dispositif de commande (22) destiné à commander les rotors sustentateurs (3) et à la communication avec une station au sol et
au moins deux dispositifs de caméra (4) destinés à enregistrer une image panoramique,
une enveloppe de rotor (5) sphérique, la plus petite et encerclant l'ensemble des rotors sustentateurs (3) présentant un volume supérieur à celui d'une enveloppe de caméra (6) sphérique la plus petite, qui encercle les lentilles de caméra (7) de l'ensemble des dispositifs de caméra (4),
les dispositifs de caméra (4) couvrant une zone de vision, la zone de vision étant obtenue à partir d'une intersection de champs de vision des dispositifs de caméra (4),
les rotors sustentateurs (3) se situant à l'extérieur de la zone de vision, la zone de vision entourant au moins partiellement l'aéronef (1),
**caractérisé en ce qu'**une enveloppe centrale (11) sphérique, la plus petite et encerclant l'ensemble des centres des rotors sustentateurs (10) présente un volume supérieur à celui de l'enveloppe de caméra (6) sphérique la plus petite.

2. Aéronef dépourvu d'ailes (1) selon la revendication 1, **caractérisé en ce que** la zone de vision entoure l'ensemble de l'aéronef.

3. Aéronef dépourvu d'ailes (1) selon la revendication 1 ou 2, **caractérisé en ce que** les dispositifs de caméra (4) présentent des caméras destinées à prendre des images monoscopiques et/ou des caméras destinées à prendre des images stéréoscopiques.

4. Aéronef dépourvu d'ailes (1) selon l'une des revendications précédentes, **caractérisé en ce qu'**au moins une distance (8) entre les lentilles de deux dispositifs de caméra (4) est inférieure à au moins une distance (9) entre deux rotors (3).

5. Aéronef dépourvu d'ailes (1) selon l'une des revendications précédentes, **caractérisé en ce que** l'ensemble des composants de l'aéronef (1) se situe en dehors de la zone de vision.

6. Aéronef dépourvu d'ailes (1) selon l'une des revendications précédentes, **caractérisé en ce que** l'aéronef (1) présente au moins quatre dispositifs de caméra (4), les dispositifs de caméra (4) étant agencés et orientés les uns par rapport aux autres de manière telle que des plans d'objectif parallèles aux plans d'image des dispositifs de caméra (4) encerclent un polyèdre d'objectif convexe (12, 14, 15', 15", 16) de telle sorte que chaque surface limite (13) du polyèdre d'objectif (12, 14, 15', 15", 16) se situe dans un plan d'objectif et les objectifs des dispositifs de caméra (4) sont agencés complètement à l'intérieur du polyèdre d'objectif (12, 14, 15', 15", 16).

7. Aéronef dépourvu d'ailes selon la revendication 6, **caractérisé en ce que** les rotors sustentateurs (3) sont agencés dans une région entre la zone de vision et le polyèdre d'objectif convexe (12, 14, 15', 15", 16).

8. Aéronef dépourvu d'ailes (1) selon la revendication 7, **caractérisé en ce que** les rotors sustentateurs (3) sont agencés de façon à faire saillie partiellement dans la région du polyèdre d'objectif convexe (12, 14, 15', 15", 16).

9. Aéronef dépourvu d'ailes (1) selon la revendication 7, **caractérisé en ce que** les rotors sustentateurs (3) sont agencés complètement en dehors du polyèdre d'objectif convexe (12, 14, 15', 15", 16).

10. Aéronef dépourvu d'ailes (1) selon l'une des revendications 6 à 9, **caractérisé en ce que** l'accumulateur d'énergie (21), le dispositif de commande (22) et les dispositifs de caméra (4) sont agencés complètement à l'intérieur du polyèdre d'objectif convexe (12, 14, 15', 15", 16).

11. Aéronef dépourvu d'ailes (1) selon l'une des revendications précédentes, **caractérisé en ce qu'**au moins deux rotors sustentateurs (3) sont agencés de manière telle que les axes de rotor (2) des rotors sustentateurs (3) ne sont pas orientés parallèlement l'un à l'autre.

12. Aéronef dépourvu d'ailes (1) selon l'une des revendications précédentes, **caractérisé en ce que** les rotors sustentateurs (3) sont agencés au niveau d'un cadre d'aéronef (18) de l'aéronef (1).

13. Aéronef dépourvu d'ailes (1) selon la revendication 12, **caractérisé en ce que** le cadre d'aéronef (18) encercle un espace de réception (19) dans lequel sont agencés complètement l'accumulateur d'énergie (21), le dispositif de commande (22) et les dispositifs de caméra (4).

14. Aéronef dépourvu d'ailes (1) selon la revendication 12 ou la revendication 13, **caractérisé en ce que** les dispositifs d'entraînement des rotors sustentateurs (3) et les rotors sustentateurs (3) sont reliés de manière rigide au cadre d'aéronef (18).

15. Aéronef dépourvu d'ailes (1) selon l'une des revendications 12 à 14, **caractérisé en ce que** l'accumulateur d'énergie (21), le dispositif de commande (22) et les dispositifs de caméra (4) sont fixés par l'intermédiaire de dispositifs d'amortissement (20) au niveau du cadre d'aéronef (18).
